# EUROPEAN PATENT APPLICATION

(11) **EP 3 217 257 A1**
(43) Date of publication of application: **13.09.2017**
(21) Application number: 17151970.5
(22) Date of filing: 18.01.2017
(51) Int. Cl.: G06F 3/01, G06F 3/03, G06Q 30/02

(54) **DISPLACEMENT DETERMINATION PROGRAM, METHOD, AND INFORMATION PROCESSING APPARATUS**

(30) Priority: 07.03.2016 JP 2016043045
(71) Applicant: FUJITSU LIMITED, Kawasaki-shi Kanagawa 211-8588 (JP)
(72) Inventor: Tomimori, Hideki, Kanagawa, 211-8588 (JP); Nakashima, Satoshi, Kanagawa, 211-8588 (JP)
(74) Representative: Hoffmann Eitle

(57) **Abstract**

A displacement determination program is disclosed. First and second face areas of a person are extracted, respectively, from first and second images captured by first and second imaging devices arranged at certain positions where first and second available ranges for detecting a gaze are overlapped. First and second feature points are detected based on light reflections in the first face area and the second face area being extracted. First and second gaze positions of the person are calculated based on the first and second feature points being detected. An arrangement displacement is determined from both or one of the certain positions of the first and second imaging devices based on a relative position relationship between the first and second gaze positions.

## Description

### FIELD

The embodiments discussed herein are related to a displacement determination program, a displacement determination method, and an information processing apparatus.

### BACKGROUND

Recently, in utilization of a gaze detection in a distribution field and the like, it has been considered desirable to comprehend a product and the like which a customer views, to collect product information in which the customer is interested, and to utilize the product information for marketing. In order to utilize the gaze detection, a detection range is greater than a case of detecting a gaze position with respect to an image being displayed at a Personal Computer (PC).

A camera is used as a sensor for detecting the gaze, and the gaze of the customer is detected based on an output result of the camera. By using technologies for synthesizing images captured by multiple cameras, synthesizing visual coordinates detected by the multiple cameras, and the like, a detection range of the gaze may be extended.

### [Patent Documents]

Japanese Laid-open Patent Publication No. 2005-251086
Japanese Laid-open Patent Publication No. 2015-119372

### SUMMARY

Accordingly, it is an object in one aspect of the embodiments to reduce a workload of a determination process of an arrangement displacement of an imaging device.

According to one aspect of the embodiments, there is provided a displacement determination program for causing a computer to execute a displacement determination process including: extracting, respectively, a first face area and a second face area of a person from a first image and a second image captured by a first imaging device and a second imaging device arranged at certain positions where a first available range and a second available range for detecting a gaze are overlapped; detecting a first feature point and a second feature point based on light reflections in the first face area and the second face area being extracted; calculating a first gaze position and a second gaze position of the person based on the first feature point and the second feature point being detected; and determining an arrangement displacement from both or one of the certain positions of the first imaging device and the second imaging device based on a relative position relationship between the first gaze position and the second gaze position.

According to other aspects of the embodiments, there are provided a displacement determination method, and an information processing apparatus.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1A and FIG. 1B are diagrams for explaining a feature point-based displacement detection method;
FIG. 2 is a diagram illustrating a data example of a correspondence map;
FIG. 3 is a diagram for briefly explaining process flows of displacement detections;
FIG. 4 is a diagram for briefly explaining a gaze detection;
FIG. 5A to FIG. 5E are diagrams for explaining a visual detection method;
FIG. 6A and FIG. 6B are diagrams for explaining a gaze-based displacement determination process;
FIG. 7 is a diagram illustrating an example of a system configuration;
FIG. 8 is a diagram illustrating another example of the system configuration;
FIG. 9 is a diagram illustrating a hardware configuration of an information processing apparatus;
FIG. 10 is a diagram illustrating a functional configuration example of the information processing apparatus in a first embodiment;
FIG. 11 is a flowchart for explaining a displacement determination process in the first embodiment;
FIG. 12 is a diagram illustrating an example of an information processing apparatus in a second embodiment;
FIG. 13A and FIG. 13B are diagrams for explaining a size change of a common area depending on a distance;
FIG. 14 is a diagram illustrating a data structure example of a common area size table;
FIG. 15 is a flowchart for explaining a first determination process by an inner-common area determination part;
FIG. 16A and FIG. 16B are diagrams for explaining operation characteristics of an eyeball;
FIG. 17 is a flowchart for explaining a second determination process by a gaze position displacement determination part;
FIG. 18A and FIG. 18B are diagrams for explaining a detection error of a gaze position of a sensor;
FIG. 19 is a diagram illustrating a data structure example of an error threshold table;
FIG. 20 is a flowchart for explaining a third determination process by a gaze position displacement determination part;
FIG. 21A and FIG. 21B are diagrams illustrating an arrangement method of multiple sensors to extend a detection range in a perpendicular direction;
FIG. 22A and FIG. 22B are diagrams illustrating arrangement methods of the multiple sensors to extend the detection range in a parallel direction;
FIG. 23 is a diagram illustrating an arrangement example in which the detection range is extended in both the perpendicular direction and the horizontal direction; and
FIG. 24 is a diagram for explaining an example of a primary-secondary relationship in a case of aligning three or more sensors.

### DESCRIPTION OF EMBODIMENTS

In a case of a gaze detection using multiple cameras, when the camera as a sensor is displaced by some influence, a product in a gaze direction is not specified. Hence, as one of problem, a gaze is not measured. The displacement of the camera is detected by arranging accelerator sensors or the like into the multiple cameras. However, in a case of attempting to extend the detection range of the gaze by using multiple existing cameras without implementing the accelerator sensors into the multiple cameras, a workload of a determination process of an arrangement displacement of one or more cameras becomes greater.

In the following embodiments, it is possible to reduce the workload of the determination process of the arrangement displacement for imaging devices.

Preferred embodiments of the present invention will be described with reference to the accompanying drawings. In the embodiments, each camera is used as a sensor, and by arranging multiple cameras, the workload of the determination process of the arrangement displacement pertinent each position of multiple arranged cameras (sensors) is reduced.

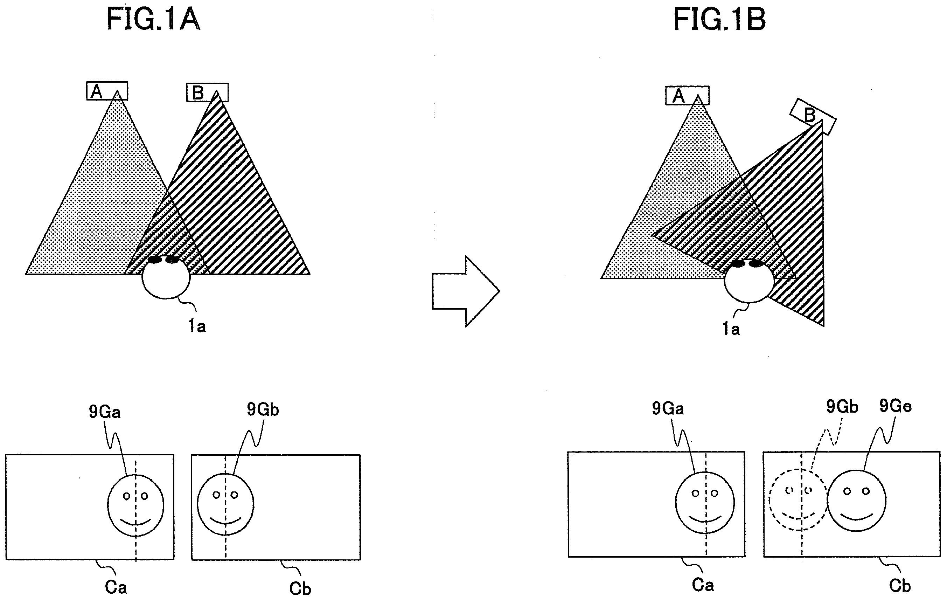

Prior to explanations of the embodiments, a feature point-based displacement detection method is examined. FIG. 1A and FIG. 1B are diagrams for explaining the feature point-based displacement detection method. In the feature point-based displacement detection method, first, a sensor A and a sensor B are arranged at right positions, and capture a face 1a of a person.

FIG. 1A depicts an example of captured images in a case of arranging the sensor A and the sensor B at the right positions. In a captured image Ca by the sensor A, a face image 9Ga of the face 1a is positioned at a right side. However, In a captured image Cb by the sensor B, a face image 9Gb of the face 1a is positioned at a left side.

Next, when the sensor B is shifted from the right position, the captured image Cb is acquired as depicted in FIG. 1B. When the sensor A is not shifted from the right position, the face 1a is photographed at the right side similar to FIG. 1A. However, in the captured image Cb by the sensor B, the face 1a is photographed approximately at a center of the captured image Cb.

In the captured image Cb in FIG. 1B, the face 1a is photographed at a position of a face image 9Ge, instead of a position of the face image 9Gb. The position of the face 1a in the captured image Cb in FIG. 1B is different from that in the captured image Cb in FIG. 1A. By detecting this difference by image processing, the arrangement displacement of the sensor B is determined.

However, in order to recognize the face 1a, detect the position of the face 1a in the captured image Cb, and acquire the difference of the positions of the face 1a by the image processing between the captured image Cb in FIG. 1A and the captured image Cb in FIG. 1B, the workload is greater. Moreover, the face 1a is recognized and it is determined whether the position of the face 1a changes, with respect to each of the captured image Ca in FIG. 1A and the captured image Ca in FIG. 1B. The greater a number of sensors is, the greater the workload of recognizing the face 1a and conducting the image processing for a position determination of the face 1a is.

In the displacement detection using feature points, a face, an eye counter, a pupil, and the like are the feature points. Sizes of these shapes change depending on not only a person but also a distance between the face 1a and each of the sensors A and B. In order to precisely detect a displacement, it has been considered that cornea reflection is used as the feature point. Within the captured image Ca or Cb, the shape of the cornea reflection is detected as a small point. In the following, a detected position of the cornea reflection is called a "cornea reflection position".

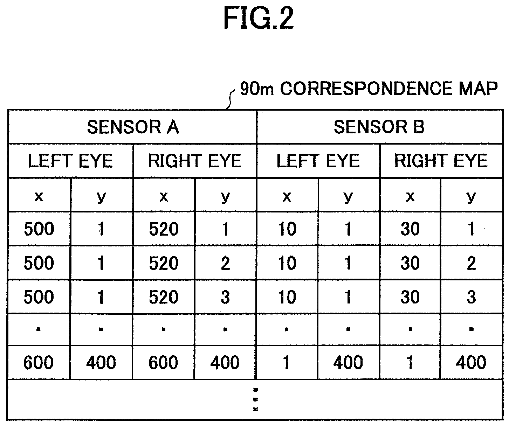

By acquiring the cornea reflection positions of right and left eyes in the captured images Ca and Cb when each of the sensors A and B are arranged at the right positions, it is possible to improve a recognition accuracy of the face 1a. For example, as depicted in FIG. 2, a correspondence map 90m is created beforehand to indicate the cornea reflection positions for each of the sensors A and B for a position recognition of the face 1a in the captured images Ca and Cb. Hence, it is possible to reduce the workload of a recognition process of the face 1a.

FIG. 2 is a diagram illustrating a data example of the correspondence map. A correspondence map 90m illustrated in FIG. 2 indicates correspondences of the cornea reflection positions of the right and left eyes of the person between the sensor A and the sensor B when the face 1a is simultaneously photographed by the sensor A and the sensor B arranged at the right positions. The cornea reflection positions are indicated by xy-coordinates for each of the right eye and the left eye.

When the cornea reflection positions detected from the captured images Ca and Cb do not exist in the xy-coordinates listed in the correspondence map 90m, one or more sensors A and B are displaced.

However, the feature points change depending on a distance from a camera to the eyes of the face 1a of the person. Thus, the correspondence map 90m is prepared for each of distances. Moreover, positions where the feature points are detected may exist anywhere (x-coordinates and y-coordinates) in the entire regions of the captured images Ca and Cb. Thus, a correspondence relationship between the feature points and the distances is examined. That is, a process for examining the correspondence relationship is performed depending on the distance (z-coordinate). Hence, it is difficult to reduce a calculation amount in a case of using the feature points.

In the embodiments described below, a gaze location is specified based on a difference between a position of a black eye (the pupil) and the cornea reflection position for each of the sensors A and B (the cameras), and the arrangement displacement of one or more sensors A and B is detected based on a distance between the specified gaze positions. By methods described in the embodiments, it becomes possible to reduce the workload pertinent to a process for detecting the arrangement displacement of each of the sensor A and the sensor B.

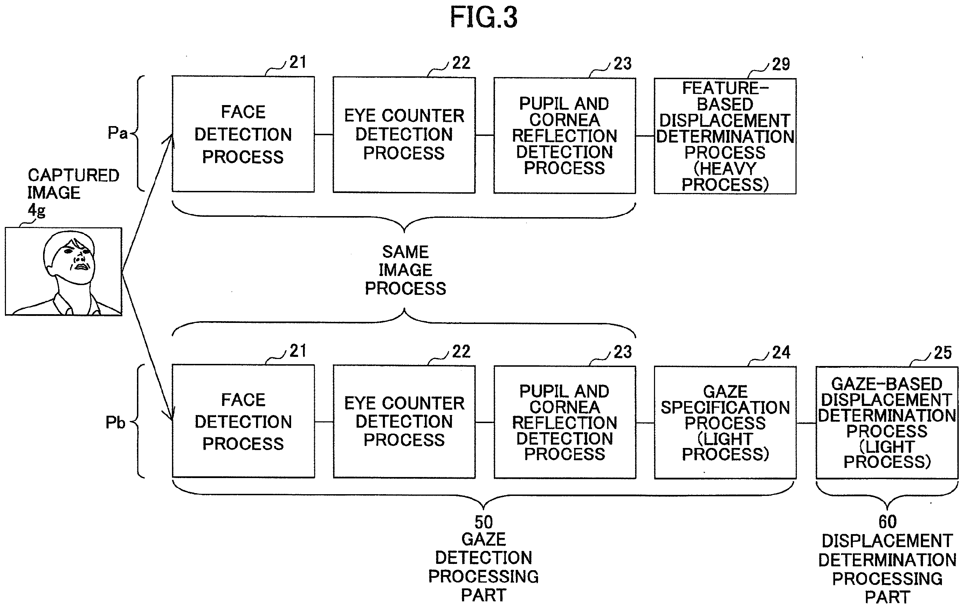

First, a difference between the above-described displacement detection based on the feature points and the displacement detection based on the gazes in the embodiments described below will be described with reference to FIG. 3. A method using the feature points is called the "feature point-based displacement detection method" and a method using the gaze is called a "gaze-based displacement detection".

FIG. 3 is a diagram for briefly explaining process flows of the displacement detections. A process flow Pa indicates to detect the arrangement displacement of the sensors A and B by the feature point-based displacement detection method. A process flow Pb indicates to detect the arrangement displacement of the sensors A and B by the gaze-based displacement detection. In the process flow Pa and the process flow Pb, there are a face detection process 21, an eye counter detection process 22, and a pupil and a cornea reflection detection process 23.

In the process flow Pa of the feature point-based displacement detection method, the cornea reflection detection process 23 conducts a displacement determination process 29 of the feature point-based method using the feature points including a pupil position and cornea reflection position, which are acquired by the cornea reflection detection process 23. The displacement determination process 29 of the feature point-based method is a process of which the workload is heavy as described above.

In the embodiments, the displacement determination process 29 of the feature point-based method is replaced with a gaze specification process 24 and a gaze-based displacement determination process 25, and the workload is reduced.

In the process flow Pb, the gaze specification process 24 specifies the gaze by using the pupil position and the cornea reflection position acquired by the cornea reflection detection process 23. The gaze-based displacement determination process 25 determines, based on the gaze specified by the gaze specification process 24, whether the sensors A and B are displaced from the right positions.

In the embodiments, the face detection process 21, the eye counter detection process 22, the pupil and a cornea reflection detection process 23, and the gaze specification process 24 are conducted by a gaze detection processing part 50. The gaze-based displacement determination process 25 is conducted by a displacement determination processing part 60.

In the following, a functional configuration including the gaze detection processing part 50 and the displacement determination processing part 60 will be described below as a first embodiment. First, a gaze detection process by the gaze detection processing part 50 will be described.

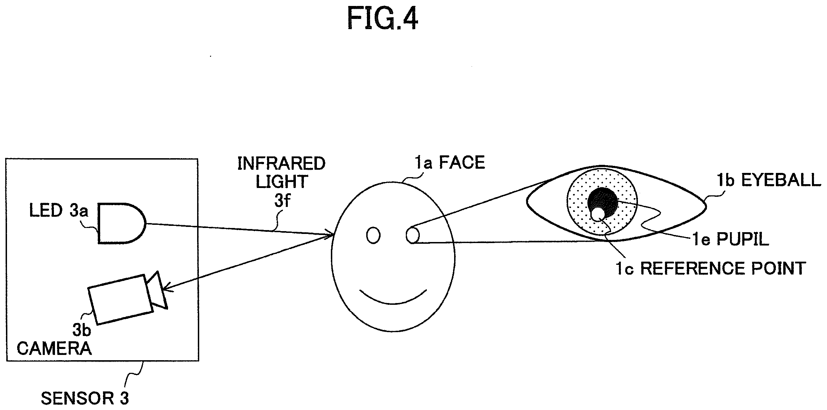

FIG. 4 is a diagram for briefly explaining the gaze detection. In the gaze detection in FIG. 4, a sensor 3 including a Light Emitting Diode (LED) 3a and a camera 3b is used.

The sensor 3 emits an infrared light 3f from the LED 3a, and the face 1a of a customer or the like is captured. The gaze is detected from an eye ball 1b being photographed. The cornea reflection is caused in the eyeball 1b due to the infrared light 3f emitted from the LED 3a. The cornea reflection occurs at a constant position, regardless of a movement of the eyeball 1b. Hence, the cornea reflection is used as a reference point 1c.

However, the eyeball 1b moves in accordance with the gaze, and thus, the pupil 1e (the black eye) also moves. Regardless of the movement of the eyeball 1b, an eyeball movement is detected based on a position relationship between the reference point 1c indicating the constant position and the pupil 1e, and thus, the gaze is calculated.

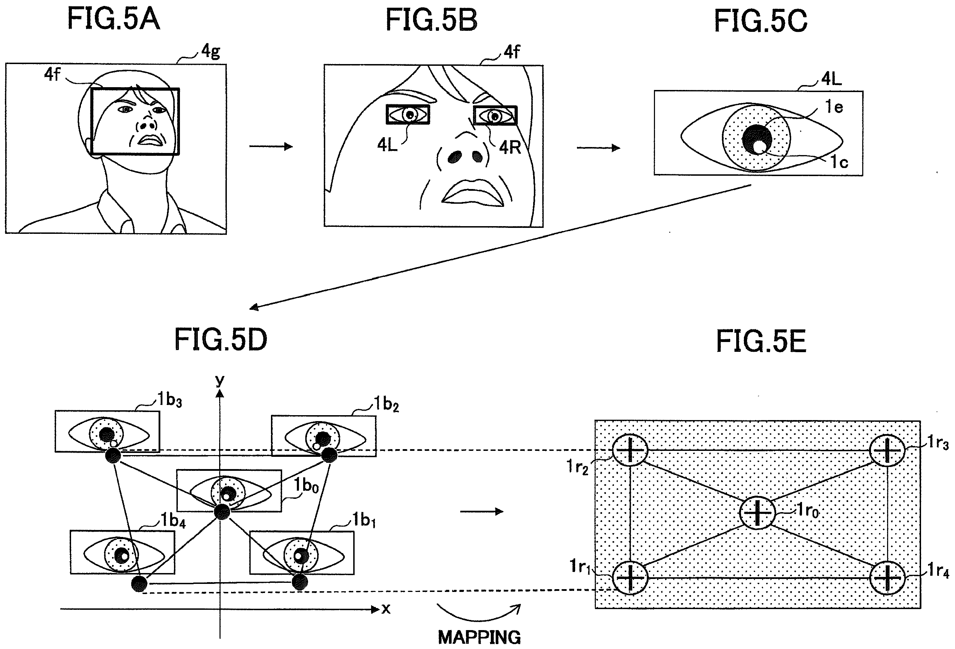

FIG. 5A to FIG. 5E are diagrams for explaining a visual detection method. The visual detection method first extracts by detecting the face 1a from the captured image 4g of the camera 3b of the sensor 3 in FIG. 5A. Next, the visual detection method detects the eye counter from a face image 4f, and eye counter images 4R and 4L are extracted in FIG. 5B. In FIG. 5B, the eye counter image 4R corresponds to an image including an eye counter portion of the detected right eye, and the eye counter image 4L corresponds to an image including the eye counter portion of the detected left eye.

After that, the pupil 1e and the cornea reflection position as the reference point 1c are detected from the eye counter images 4R and 4L. In FIG. 5C, an example of detecting the pupil le and the reference point 1c from the eye counter image 4L is depicted. Also, the pupil 1e and the reference point 1c are detected from the eye counter image 4R.

A gaze calculation is conducted based on the pupil le and reference point 1c. A relationship between a difference between positions of the reference point 1c and the pupil 1e in the captured image 4g, and the gaze will be described. The difference between positions of the reference point 1c and the pupil 1e is represented by an pixel difference in an x-direction and the pixel difference in a y-direction.

In FIG. 5D, images of the eyeball 1b and pixel differences are depicted. In a case of the pixel difference of the eyeball 1b₀ in a front range, it is determined that the gaze of the face 1a is in a front direction. In a case of the pixel difference of the eyeball 1b₁ in a lower left range, it is determined that the gaze of the face 1a is in a lower left direction. In a case of the pixel difference of the eyeball 1b₂ in an upper left range, it is determined that the gaze of the face 1a is in an upper left direction.

Also, in a case of the pixel difference of the eyeball 1b₃ in an upper right range, it is determined that the gaze of the face 1a is in an upper right direction. In a case of the pixel difference of the eyeball 1b₄ in a lower right range, it is determined that the gaze of the face 1a is in a lower right direction.

The pixel difference in a coordinate system of the captured image 4g is converted into a coordinate system in a real space. FIG. 5E illustrates a conversion example from the pixel differences respective to five main visual directions depicted in FIG. 5D to the gaze positions in the coordinate system in the real space.

In FIG. 5D, the coordinate system of the difference among the features points detected by the camera 3b is depicted. On the other hand, in FIG. 5E, the coordinate system in the real space viewed from the face 1a is depicted.

In detail, the pixel difference of the eyeball 1b₀ in a center in FIG. 5D is mapped to a gaze position 1r₀ of a center in FIG. 5E. The pixel difference of the eyeball 1b₁ when the gaze is at the lower right in FIG. 5D is mapped to a gaze position 1r₁ at the lower left in FIG. 5E. The pixel difference of the eyeball 1b₂ when the gaze is at the upper right in FIG. 5D is mapped to a gaze position 1r₂ at the upper left in FIG. 5E.

Also, the pixel difference of the eyeball 1b₃ when the gaze is at the upper left in FIG. 5D is mapped to a gaze position 1r₃ at the upper right in FIG. 5E. The pixel difference of the eyeball 1b₄ when the gaze is at the lower left in FIG. 5D is mapped to a gaze position 1r₄ at the lower right in FIG. 5E.

In the first embodiment, it is utilized that the gazes specified by two sensors 3 are matched to each other in an area where the captured images 4g of two sensors 3 are overlapped. That is, in the overlapped area, when one of two sensors 3 is displaced, the gazes specified by two sensors 3 are not matched to each other. Accordingly, it is possible to detect the arrangement displacement of the sensors 3.

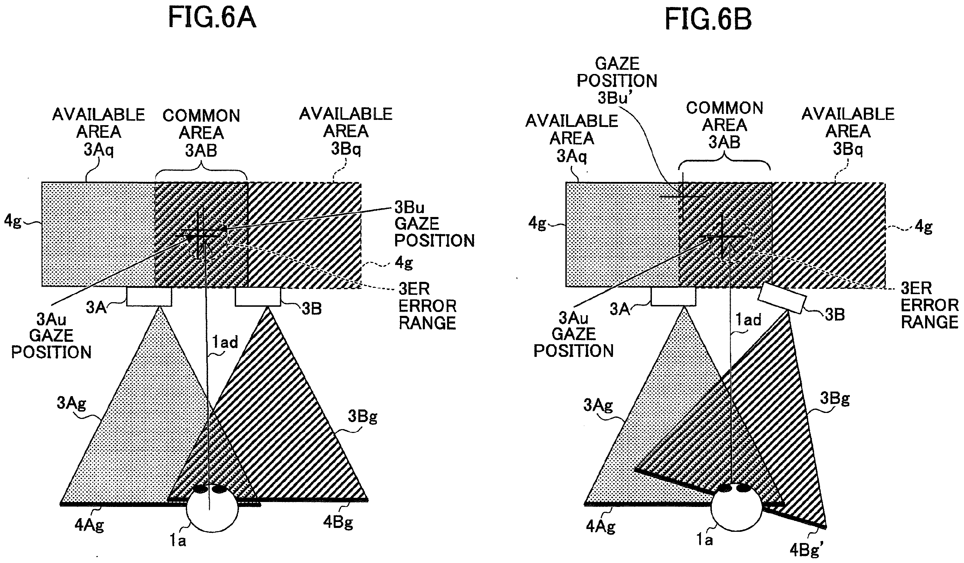

The gaze-based displacement determination process 25 conducted by the displacement determination processing part 60 according to the first embodiment will be described. FIG. 6A and FIG. 6B are diagrams for explaining the gaze-based displacement determination process. Each of sensors 3A and 3B correspond to the sensor 3 depicted in FIG. 4.

In FIG. 6A, the sensor 3A and the sensor 3B are arranged at the right positions so as to have a common area 3AB where an available area 3Aq of the sensor 3A and an available area 3Bq are overlapped to each other. Hence, FIG. 6A illustrates a case in which there is no arrangement displacement.

The available area 3Aq is regarded as an area in a xy-plane in the real space where the gaze position is detectable along a gaze direction 1ad of the face 1a from the captured image 4g of the sensor 3A in a case in which the sensor 3A is arrange at the right position. The available area 3Bq is regarded as an area in the xy-plane in the real space where the gaze position is detectable along a gaze direction 1ad of the face 1a from the captured image 4g of the sensor 3B in a case in which the sensor 3B is arranged at the right position. The common area 3AB is regarded as an area where the gaze position is detectable along a gaze direction 1ad of the face 1a from the respective captured image 4g of both the sensor 3A and the sensor 3B and the available area 3Aq and the available area 3Bq are overlapped by each other.

An imaging area 3Ag is regarded as an area where the sensor 3A captures an image with a focal distance of the sensor 3A. An imaging area 3Bg is regarded as an area where the sensor 3B captures an image with a focal distance of the sensor 3B.

A gaze position 3Au indicates the gaze position of the visual direction 1ad of the face 1a. The gaze position 3Au is acquired from the captured image 4Ag of the sensor 3A. That is, the gaze position 3Au corresponds to an output result of the gaze specification process 24, which is conducted on the captured image 4Ag of the sensor 3A.

A gaze position 3Bu indicates the gaze position of the gaze direction 1ad of the face 1a. The gaze position is acquired from the captured image 4Bg of the sensor 3B. That is, the gaze position 3Bu corresponds to the output result of the gaze specification process 24, which is conducted on the captured image 4Bg of the sensor 3B.

In a case where there is no arrangement displacement, a distance between the gaze position 3Au and the gaze position 3Bu falls in an error range 3ER, which is defined beforehand. That is, when the distance between the gaze position 3Au and the gaze position 3Bu is in the error range 3ER, it is determined that arrangement positions of both the sensor 3A and the sensor 3B are not displaced.

In FIG. 6B, a case is depicted in which after the sensor 3A and the sensor 3B are arranged at the right positions, the sensor B is displaced. A gaze direction of face 1a in this case is the same as the gaze direction 1ad.

Since the sensor 3A is not displaced, the gaze position 3Au is acquired by the gaze specification process 24 similar to FIG. 6A. However, since the arrangement position of the sensor 3B is displaced, the imaging area 3Bg of the sensor 3B is inclined. Hence, a captured image 4Bg' is acquired differently from the captured image 4Bg. With respect to the captured image 4Bg' of the sensor 3B, the output result of the gaze specification process 24 indicates the gaze position 3Bu'.

Since a distance between the gaze position 3Au' and the gaze position 3Bu' exceeds an error range 3ER, it is determined that both or one of the sensor 3A and the sensor 3B is displaced.

As described above, when both or either one of the sensor 3A and the sensor 3B is displaced, the gaze direction 1ad is not detected. Even if the gaze direction 1ad is detected, since an optical parameter of the gaze calculation becomes different from an actual parameter, the gaze position 3Au of the sensor 3A and the gaze position 3Bu of the sensor 3B do not fall in the error range 3ER. Accordingly, it is possible to detect one or more arrangement displacements of multiple sensors 3.

In the gaze-based displacement determination process 25, even if the distance from the sensor 3 to the face 1a of the person changes, when the face 1a looks at the same place, the output result indicating the gaze position does not change. Accordingly, it is possible to reduce the calculation amount by at least one dimension (that is, a dimension of the distance) less than the displacement determination process 29 of the feature point-based method. Moreover, the arrangement displacement of the sensor 3 is determined by the distance between the gaze positions. Hence, it is possible to reduce the calculation amount.

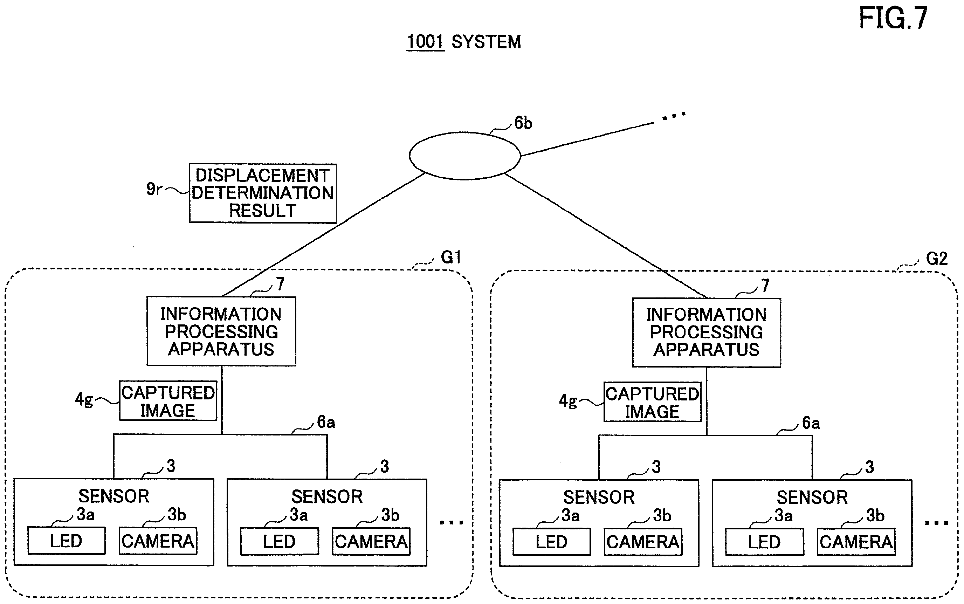

Next, a system configuration 1001 (FIG. 7), in which the multiple sensors 3 are arranged, will be described. FIG. 7 is a diagram illustrating an example of the system configuration. In the system 1001 depicted in FIG. 7, two or more sensors 3 and one information processing apparatus 7 form one group, and there are multiple groups.

In each of groups G1, G2, ..., the arrangement displacement is determined by using the captured image 4g of the adjacent sensors 3. In the group G1, the information processing apparatus 7 inputs the captured image 4g from each of the sensors 3, and determines whether the arrangement displacement occurs for the adjacent sensors 3 by using the captured images 4g of the adjacent sensors 3. In each of other groups Gi (i is an integer greater than or equal to 2), the similar operation is conducted by multiple information processing apparatuses 7. In a viewpoint of this operation, the information processing apparatus 7 is regarded as a displacement detection apparatus in each of groups G1, G2, ....

In the following, the group G1 is described as an example, and the same manner is applied to other groups Gi. The information processing apparatus 7 may be a Personal Computer (PC) or the like. The sensor 3 includes the LED 3a that emits the infrared light 3f, and the camera 3b, and is connected to the information processing apparatus 7 by a Universal Serial Bus (USB) cable 6a or the like. The LED 3a and the camera 3b may not be mounted in the same chassis, and may be separately arranged. A pair of the LED 3a and the camera 3b is defined as one sensor 3.

Each of the sensors 3 sends the captured image 4g to the information processing apparatus 7 through the USB cable 6a. The information processing apparatus 7 determines the arrangement displacement for each of pairs of the adjacent sensors 3 by using the captured images 4g received through the USB cable 6a, and acquires a displacement determination result 9r.

It is preferable that the information processing apparatus 7 is able to communicate with other information processing apparatuses 7 through a Local Area Network (LAN) 6b or the like. The displacement determination result 9r concerning the sensors 3, which is acquired by each of the information processing apparatuses 7 through the LAN 6b, is transmitted to one of the information processing apparatuses 7, which is defined beforehand as a management server. By collecting the displacement determination result 9r in the management server, it is possible to easily comprehend an arrangement displacement state for the sensors 3 as a whole.

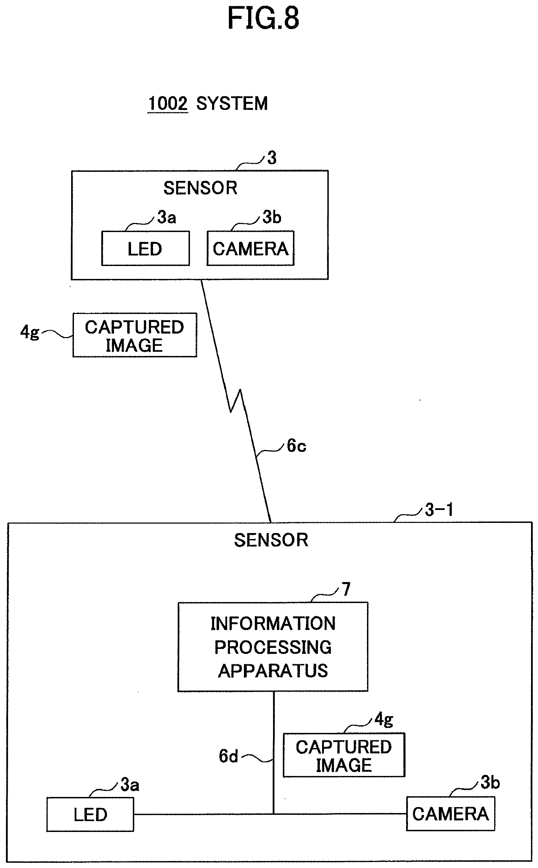

FIG. 8 is a diagram illustrating another example of the system configuration. A system 1002 depicted in FIG. 8 includes the information processing apparatus 7, a sensor 3-1 including the LED 3a and the camera 3b, and the sensor 3 including the LED 3a and the camera 3b. The sensor 3-1 is arranged to be adjacent to the sensor 3.

The sensor 3-1 and the sensor 3 are connected through a wireless LAN 6c or the like. By sending the captured image 4g from the sensor 3 to the sensor 3-1, the sensor 3-1 determines the arrangement displacement.

The sensor 3-1 includes the LED 3a, the camera 3b, and the information processing apparatus 7, and is connected to the information processing apparatus 7 via a bus 6d or the like. The LED 3a and the camera 3b may not be implemented in the same chassis. The LED 3a and the camera 3b may or may not be separately arranged, and be connected to the information processing apparatus 7 via the USB cable 6a.

The sensor 3 includes the LED 3a and the camera 3b. Similar to the configuration of the sensor 3 in FIG. 4 and FIG. 7, the sensor 3 includes the LED 3a that emits the infrared light 3f, and the camera 3b. The sensor 3 sends the captured image 4g to the sensor 3-1 through the wireless LAN 6c or the like.

The sensor 3-1 determines the arrangement displacement by using the captured image 4g received from the sensor 3 and the captured image 4g input from the sensor 3-1, and outputs the displacement determination result 9r. The displacement determination result 9r is reported to a user. A message indicating the displacement determination result 9r may be transmitted to a destination, which is defined beforehand.

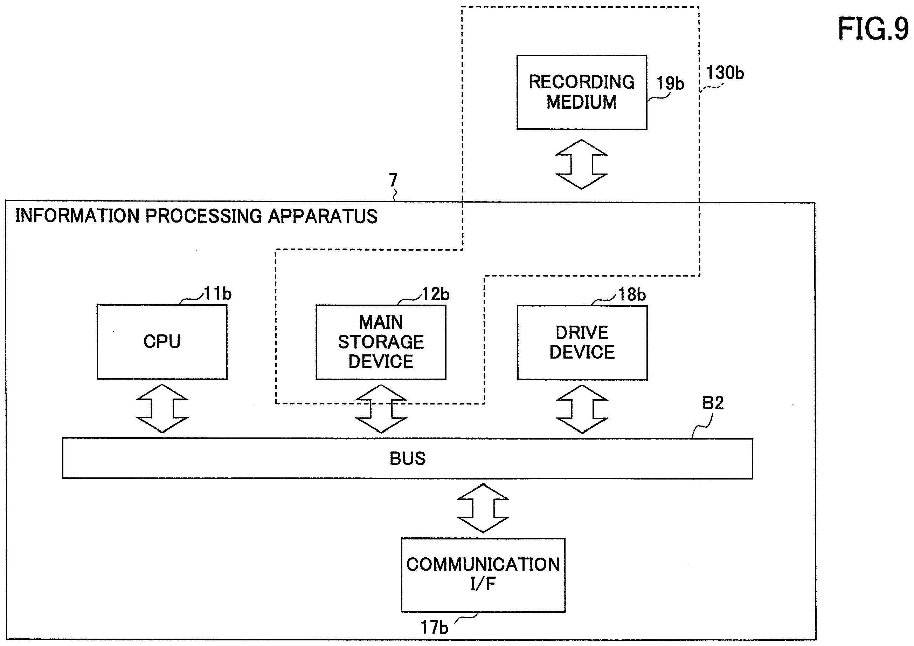

FIG. 9 is a diagram illustrating a hardware configuration of the information processing apparatus. The information processing apparatus 7 depicted in FIG. 9 corresponds to a terminal controlled by a computer, and includes a Central Processing Unit (CPU) 11b, a main storage device 12b, a communication InterFace (I/F) 17b, and a drive device 18b, which are connected via a bus B2.

The CPU 11b corresponds to a processor that controls the information processing apparatus 7 in accordance with a program stored in the main storage device 12b. The CPU 11b may be an integrated processor, a System on Chip (SoC), a Digital Signal Processor (DSP), a Field-Programmable Gate Array (FPGA), a specific Application Specific Integrated Circuit (ASIC), or the like.

As the main storage device 12b, a Random Access Memory (RAM), a Read Only Memory (ROM), and the like may be used, and store or temporarily store a program to be executed by the CPU 11b, data used in a process of the CPU 11b, data acquired in the process of the CPU 11b, and the like. By executing the program stored in the main storage device 12b by the CPU 11b, various processes are realized.

Communications by the communication I/F 17b are not limited to wireless or wired communications. In the first embodiment, the communication I/F 17b supports various types of a short distance wireless communication for the sensors 3 such as the LAN, the USB, a wireless LAN, a Bluetooth (registered trademark), and the like.

The program realizing the process conducted by the information processing apparatus 7 may be downloaded from an external apparatus through a network. Alternatively, the program may be stored in the main storage device 12b of the information processing apparatus 7 or a recording medium 19b. A storage part 130b corresponds either one or both the main storage device 12b and the recording medium 19b, and may be simply called a "memory".

The drive device 18b interfaces between the recording medium 19b (such as a Secure Digital (SD) memory card or the like) set to the drive device 18b and the information processing apparatus 7. It is noted that the recording medium 19b is a non-transitory tangible computer-readable medium including a data structure.

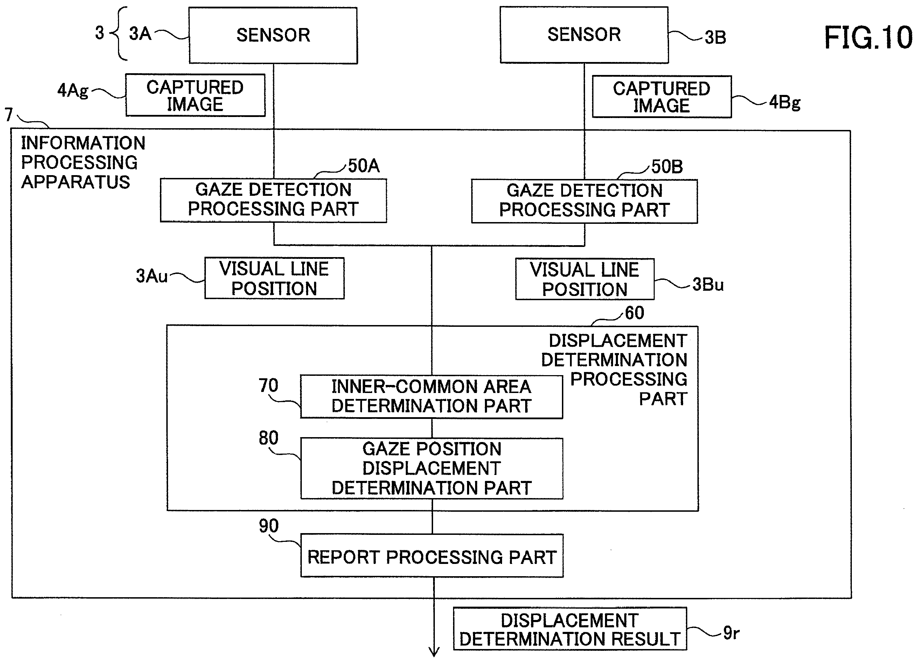

FIG. 10 is a diagram illustrating a functional configuration example of the information processing apparatus in the first embodiment. In FIG. 10, a case in which the sensor 3A and the sensor 3B are connected to the information processing apparatus 7 is described. The information processing apparatus 7 mainly includes gaze detection processing parts 50A and 50B, the displacement determination processing part 60, and a report processing part 90.

Each of the gaze detection processing parts 50A and 50B corresponds to the gaze detection processing part 50 in FIG. 3. The gaze detection processing part 50A specifies the gaze direction 1ad (FIG. 6) based on the captured image 4Ag received from the sensor 3A, calculates a position in a xy-plane in the real space where the face 1a (FIG. 6) observes, and outputs the gaze position 3Au to the storage part 130b.

The gaze detection processing part 50B also specifies the gaze direction 1ad from the captured image 4Bg received from the sensor 3B, calculates the position in the real space where the face 1a observes, and outputs the gaze position 3Bu.

The displacement determination processing part 60 acquires the gaze position 3Au and the gaze position 3Bu from the storage part 130b, and conducts the gaze-based displacement determination process 25 for determining presence or absence of the arrangement displacement pertinent to the sensors 3A and 3B based on the gaze position 3Au and the gaze position 3Bu. The displacement determination processing part 60 includes an inner-common area determination part 70, and a gaze position displacement determination part 80.

The inner-common area determination part 70 determines whether both the gaze position 3Au and the gaze position 3Bu are in the common area 3AB defined beforehand. When both or one of the gaze position 3Au and the gaze position 3Bu is outside the common area 3AB, the gaze-based displacement determination process 25 is terminated. Then, the gaze-based displacement determination process 25 is conducted with respect to the gaze position 3Au of a next captured image 4Ag and the gaze position 3Bu of a next captured image 4Bg.

The gaze position displacement determination part 80 determines that both or one of the sensor 3A and the sensor 3B is displaced, when the distance between the distance between the gaze position 3Au and the gaze position 3Bu in the common area 3AB exceeds the error range 3ER (FIG. 6), and outputs the displacement determination result 9r in the storage part 130b. When the distance is shorter than or equal to the error range 3ER, the gaze-based displacement determination process 25 is terminated for the gaze position 3Au and the gaze position 3Bu being processed. Then, the gaze-based displacement determination process 25 is re-started for the next captured image 4Ag and the next captured image 4Bg.

A report processing part 90 sends the message indicating the displacement determination result 9r to the destination defined beforehand. The message indicating the displacement determination result 9r may be transmitted by an electronic mail, a data file, or the like.

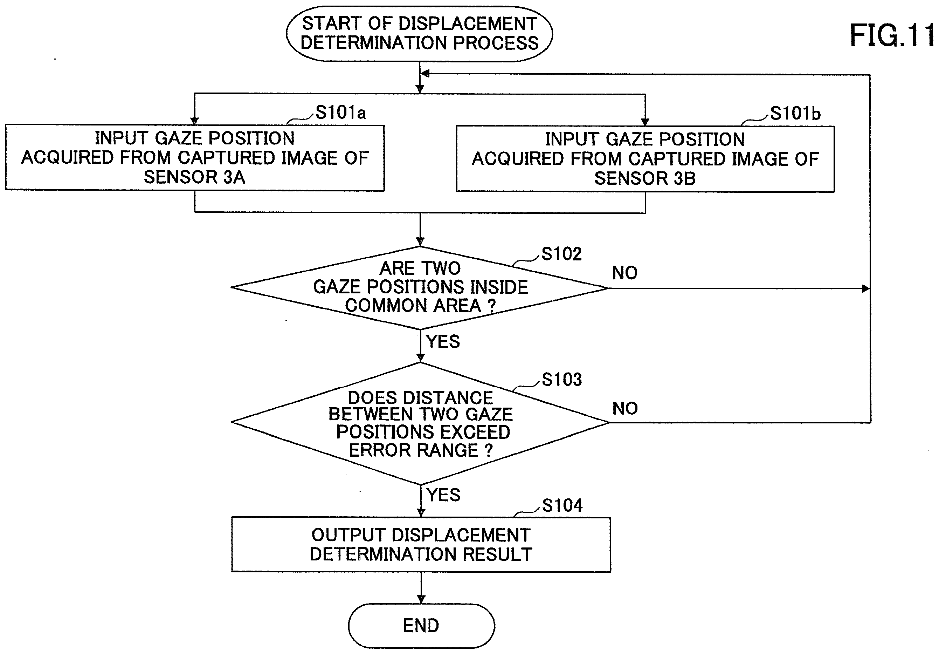

FIG. 11 is a flowchart for explaining the displacement determination process in the first embodiment. In FIG. 11, the inner-common area determination part 70 of the displacement determination processing part 60 inputs the gaze position 3Au acquired from the captured image 4Ag of the sensor 3A from the storage part 130b (step S101a), and inputs the gaze position 3Bu acquired from the captured image 4Bg of the sensor 3B from the storage part 130b (step S101b). Any input order of the gaze position 3Au and the gaze position 3Bu is available.

The inner-common area determination part 70 determines whether the gaze position 3Au and the gaze position 3Bu are in the common area 3AB (FIG. 6) (step S102). When both or one of the gaze position 3Au and the gaze position 3Bu is in the common area 3AB (FIG. 6) (No of step S102), the gaze-based displacement determination process 25 goes back to step S101a and step S101b. Then, the inner-common area determination part 70 inputs the gaze position 3Au and the gaze position 3Bu, and conducts the above described processes.

On the other hand, when the gaze position 3Au and the gaze position 3Bu are in the common area 3AB (Yes of step S102), the gaze position displacement determination part 80 determines whether the distance between the gaze position 3Au and the gaze position 3Bu exceeds the error range 3ER (step S103).

When the distance between the gaze position 3Au and the gaze position 3Bu is in the error range 3ER (No of step S103), the gaze-based displacement determination process 25 goes back to step 101a and step 101b. Then, the inner-common area determination part 70 inputs the gaze position 3Au and the gaze position 3Bu, and conducts the above described processes.

When the distance between the gaze position 3Au and the gaze position 3Bu exceeds (Yes of step S103), the inner-common area determination part 70 outputs the displacement determination result 9r to the storage part 130b (step s104). Then, the gaze-based displacement determination process 25 is terminated. After that, the report processing part 90 transmits the message indicating the displacement determination result 9r to the destination defined beforehand.

It is preferable that the displacement determination result 9r includes information of sensor identification information for specifying the sensor 3A and the sensor 3B, time, and the like. The sensor identification information and the time are added to each of the captured images 4Ag at the sensors 3A and 3B. At the information processing apparatus 7, the gaze detection processing parts 50A and 50B may add and output the sensor identification information and the time to the gaze position 3Au and the gaze position 3Bu, respectively, to the storage part 130b.

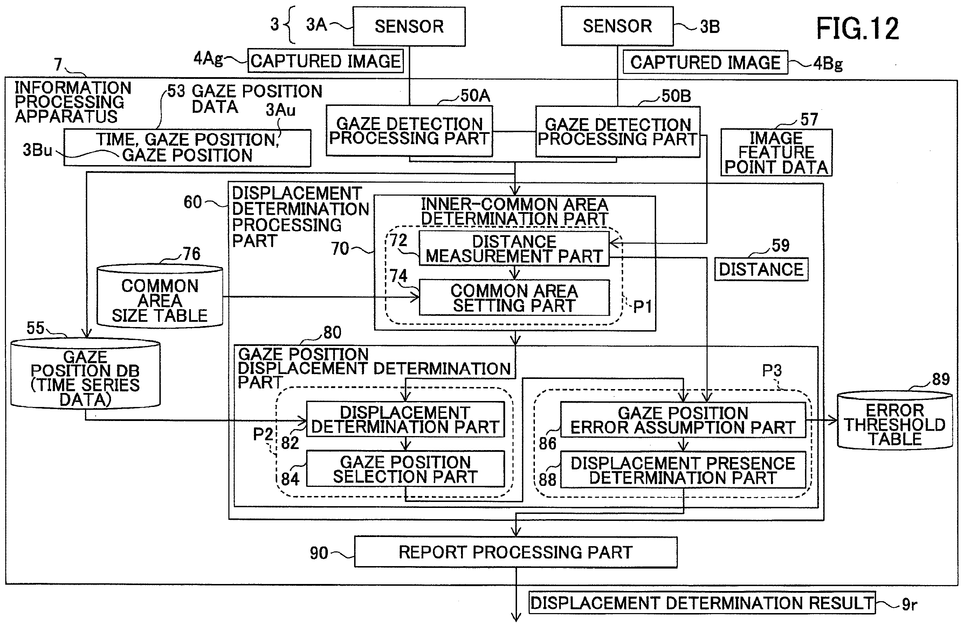

Another example of the functional configuration of the displacement determination processing part 60 will be described as a second embodiment. FIG. 12 is a diagram illustrating an example of the information processing apparatus in the second embodiment. In FIG. 12, the functional configuration of the displacement determination processing part 60 will be mainly described.

The gaze detection processing part 50A acquires the time from the captured images 4Ag every time the gaze detection processing part 50A acquires the gaze position 3Au from the captured images 4Ag. The gaze detection processing part 50B also acquires the time from the captured images 4Bg in the same manner. The acquired time and gaze position data 53 indicating the gaze position 3Au or the gaze position 3Bu are stored in a chronological order in a visual position DB 55 in the storage part 130b.

Image feature point data 57, which indicates information of multiple image feature points extracted from the captured images 4Ag and 4Bg by the gaze detection processing parts 50A and 50B. The image feature point data 57 include information of the feature points pertinent to a counter of the face 1a, the eye counters, the pupil 1e, the reference point 1c corresponding to cornea reflection position, and the like.

The inner-common area determination part 70 of the displacement determination processing part 60 includes a distance measurement part 72, and a common area setting part 74. The inner-common area determination part 70 inputs the gaze positions 3Au and 3Bu from the storage part 130b in response to detection reports from the gaze detection processing parts 50A and 50B. A first determination process P1 corresponds to the distance measurement part 72, and the common area setting part 74.

The distance measurement part 72 acquires the image feature point data 57 from the storage part 130b, and calculates a distance 59 from the sensor 3A and the sensor 3B to the face 1a of the person by using the image feature point data 57. The distance 59 is stored in the storage part 130b.

The common area setting part 74 refers to a common area size table 76 set beforehand, acquires a size of the common area 3AB for the sensors 3A and 3B corresponding to the distance 59 between the face 1a and the sensors 3A and 3B, which is measured by the distance measurement part 72, and defines the common area 3AB in the real space as depicted in FIG. 6A based on the acquired size of the common area 3AB and the right positions of the sensors 3A and 3B.

The common area setting part 74 determines whether the gaze positions 3Au and 3Bu are in the defined common area 3AB. When both or one of the gaze position 3Au and the gaze position 3Bu is in the common area 3AB, a process by the gaze position displacement determination part 80 becomes enabled.

The gaze position displacement determination part 80 of the displacement determination processing part 60 becomes enabled by the inner-common area determination part 70 when the gaze position 3Au and the gaze position 3Bu are in the common area 3AB, and includes a displacement determination part 82, a gaze position selection part 84, a gaze position error assumption part 86, and a displacement presence determination part 88. A second determination process P2 corresponds to the displacement determination part 82 and the gaze position selection part 84. A third determination process P3 corresponds to the gaze position error assumption part 86, and the displacement presence determination part 88.

As operation characteristics of the eyeball 1b, there are a saccade state in which the gaze position rapidly jumps and a retained state in which the gaze position stably stops. In the second determination process P2, the gaze positions 3Au and 3Bu are selected when the movement of the eyeball 1b is the retained state.

The displacement determination part 82 sets a time section, acquires multiple gaze positions 3Au and multiple gaze positions 3Bu acquired during the time section, and calculates a distribution amount of the gaze positions.

The gaze position selection part 84 determines that the gaze position is not retained, when the distribution amount calculated by the displacement determination part 82 is greater than or equal to a distribution amount threshold, and then, does not apply the multiple gaze positions 3Au and the multiple gaze positions 3Bu acquired during the time section. In this case, the process by the displacement determination part 82 is repeated for a most recent subsequent time section. When the calculated distribution amount is less than the distribution amount threshold, the gaze position selection part 84 determines that the gaze position is retained, and applies the multiple gaze positions 3Bu acquired during this time section.

When it is determined in the second determination process P2 that the gaze position is retained, it is further determined in the third determination process P3 using the selected gaze positions 3Au and 3Bu whether the sensor 3A and the sensor 3B are displaced. Outputs of the sensors 3A and 3B include errors, and accuracy may be degraded due to the distance to the face 1a, individual variations of a cornea shape, or the like. The farther the distance to the face 1a is, the greater the error is (the accuracy is degraded). Also, the farther from a standard value the cornea shape is, the greater the error is (the accuracy is degraded). An average of the standard value of the cornea shape is approximately 7.7 mm.

The gaze position error assumption part 86 acquires the distance 59 calculated by the distance measurement part 72 from the storage part 130b, acquires the error threshold corresponding to the distance 59 by referring to an error threshold table 89, and assumes the error of the gaze position in the retained state.

The error threshold table 89 is regarded as a table, which indicates the error threshold by vertical and horizontal lengths (cm) at a predetermined interval of the distance 59. Based on average values of heights and the cornea shapes of males and females, the error thresholds may be defined for the males and the females, respectively. With respect to one or more individuals, the height and the cornea shapes are measured, and the error thresholds are defined depending on the measured values.

The displacement presence determination part 88 determines, by using the error thresholds acquired by the gaze position error assumption part 86, that the arrangement displacement pertinent to the sensors 3A and 3B occurs, when the multiple gaze positions 3Au and multiple gaze positions 3Bu selected by the gaze position selection part 84 are distributed more than the error threshold. The displacement determination result 9r is output to the storage part 130b.

The displacement determination result 9r indicates the time, an the sensor identification information of the sensor 3A or 3B. The time may be specified by the time section where the multiple gaze positions 3Au and the multiple gaze positions 3Bu are applied, or may be specified by a start time or an end time of the time section. When the displacement determination result 9r is output from the gaze position displacement determination part 80, the displacement determination result 9r is transmitted by the report processing part 90 to the destination defined beforehand. The displacement determination result 9r is reported as an alarm as the arrangement displacement of the sensor 3A or 3B is detected.

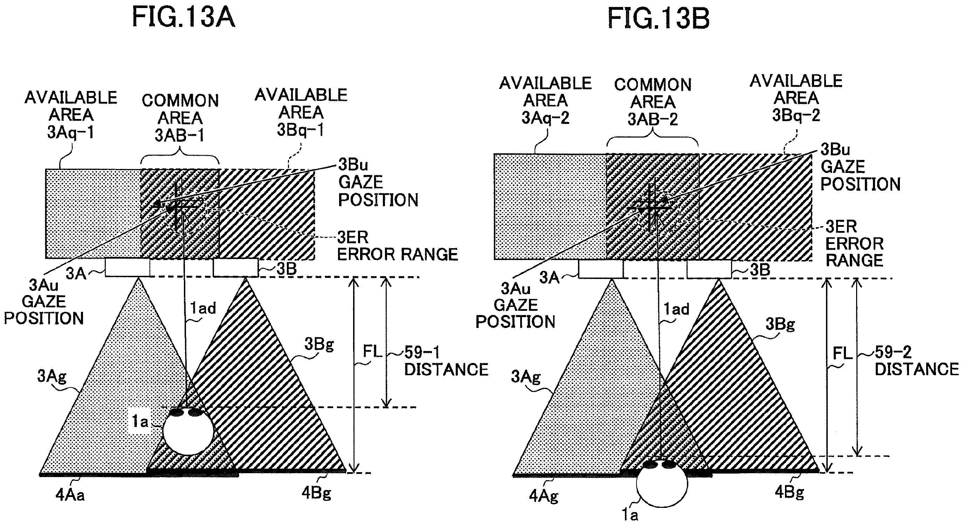

A size difference of the common area 3AB depending on the distance 59 will be described. FIG. 13A and FIG. 13B are diagrams for explaining a size change of the common area depending on the distance.

FIG. 13A indicates a case in which the distance is shorter. In this case, a common area 3AB-1 is depicted when a distance 59-1 is shorter than a focal length FL. FIG. 13B indicates a case in which the distance is longer. In this case, a common area 3AB-2 is depicted when a distance 59-2 is approximately the same as the focal length FL.

An available area 3Aq-1 of the sensor 3A defined by the distance 59-1 in FIG. 13A is shorter than an available area 3Aq-2 of the sensor 3A defined by the distance 59-2. Also, an available area 3Bq-1 of the sensor 3B defined by the distance 59-1 in FIG. 13A is shorter than an available area 3Bq-2 of the sensor 3B defined by the distance 59-2 in FIG. 13B.

Accordingly, the size of the common area 3AB-1 is smaller than the size of the common area 3AB-2. The common area 3AB-1 is regarded as an area where the available area 3Aq-1 of the sensor 3A is overlapped with the available area 3Bq-1 of the sensor 3B in a case of the distance 59-1 in FIG. 13A. The common area 3AB-2 is regarded as an area where the available area 3Aq-2 of the sensor 3A is overlapped with the available area 3Bq-2 of the sensor 3B in a case of the distance 59-2 in FIG. 13B. As described above, the size of the common area 3AB changes depending on the distance 59.

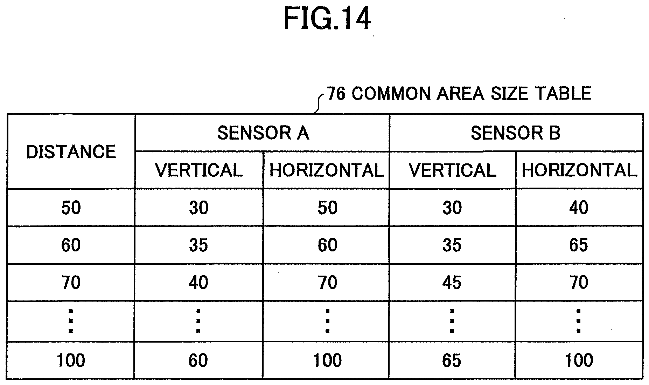

FIG. 14 is a diagram illustrating a data structure example of a common area size table. In FIG. 14, the common area size table 76 is regarded as a table indicating the size of the common area 3AB depending on the distance to the person for each of the sensors 3, and includes items of "DISTANCE", "VERTICAL" and "HORIZONTAL" for each of the sensors 3, and the like.

The "DISTANCE" indicates a predetermined distance range from each of the sensors 3 to the face 1a. In this example, a unit is "cm". From the distance of "50"cm, the distance until "100"cm is indicated by every "10"cm. Values of the shortest distance and the distance interval from the sensors 3 are not limited to this example.

For each set of the sensor identification information of the sensors 3, the common area 3AB is indicated by a vertical length and a horizontal length by cm units. In this example, the sensor A and the sensor B adjacent to each other are depicted. When the distance is shorter than "50"cm, the common area 3AB in the available area 3Aq of the sensor A is "30"cm in the vertical length and "50"cm in the horizontal length. The common area 3AB in the available area 3Bq of the sensor B is "30"cm in the vertical length and "40"cm in the horizontal length. At the predetermined distance intervals, the common area 3AB is indicated.

In a case in which the gaze position 3Au and the gaze position 3Bu of the gaze position data 53 are given by vectors, the common area 3AB may be calculated for each of the sensors 3. In this case, the common area size table 76 may be omitted.

In the second embodiment, a smallest value in the vertical length and a smallest value in the horizontal length are selected for the sensor A and the sensor B being adjacent to each other, and then, the common area 3AB is defined by the sensor A and the sensor B. In detail, in a case of the distance "50"cm, the common area 3AB is set by "30"cm and "40"cm in the vertical and horizontal lengths, respectively. Other distances may be defined in the same manner.

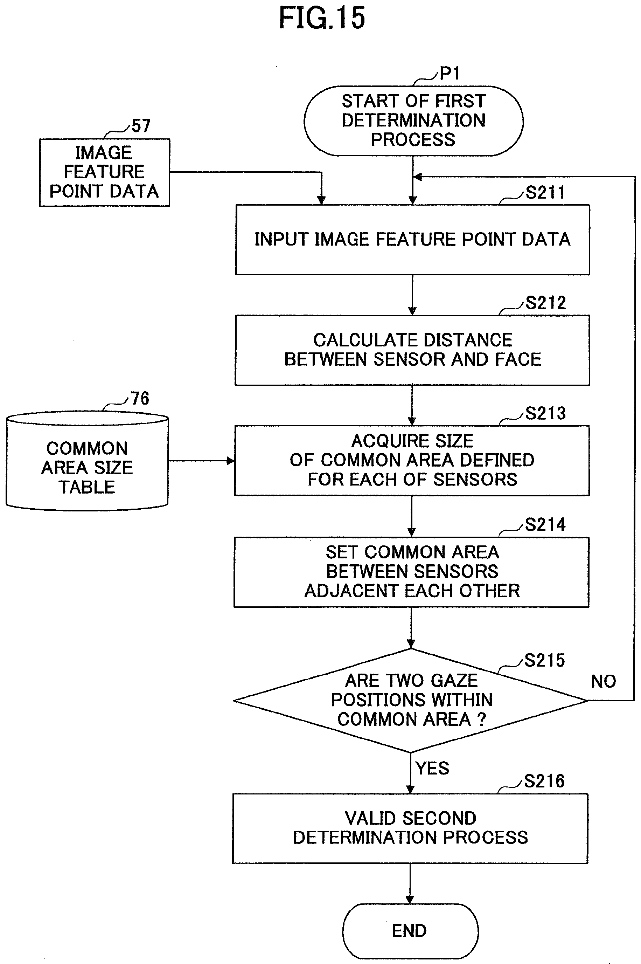

The first determination process P1 by the inner-common area determination part 70 will be described. FIG. 15 is a flowchart for explaining the first determination process by the inner-common area determination part.

In FIG. 15, the distance measurement part 72 of the inner-common area determination part 70 inputs the image feature point data 57 (step S211), and the distance 59 between the sensor 3A or 3B and the face 1a is calculated (step S212). The sensors 3A and 3B are the sensors 3 adjacent to each other. The distance 59 may be calculated between either one of the sensors 3A and 3B and the face 1a. Alternatively, the average value of distances between each of the sensors 3A and 3B and the face 1a is calculated as the distance 59. In the following, both or one of the sensors 3A and 3B may simply called the sensors 3.

The distance measurement part 72 acquires the pupils or the cornea reflection points of the right eye and the left eye from the image points feature point data 57. In general, an average of the distance between the pupils or the cornea reflection positions is 64mm. This average value is applied, and the distance 59 is calculated based on a field angle and a resolution of the sensor 3.

Next, the common area setting part 74 refers to the common area size table 76, and acquires the vertical and horizontal values of the common area 3AB set to the sensor 3A and the vertical and horizontal values of the common area 3AB set to the sensor 3B based on the distance 59 calculated by the distance measurement part 72 (step S213).

After that, the common area setting part 74 sets the common area 3AB between the sensors 3A and 3B by the smallest values in the vertical and horizontal lengths (step S214), and determines whether two gaze positions 3Au and 3Bu are in the common area 3AB (step S215). Both gaze positions 3Au and 3Bu are acquired from the image feature point data 57.

When the common area setting part 74 determines that both or one of the gaze positions 3Au and 3Bu is outside the common area 3AB (No of step S215), the inner-common area determination part 70 goes back to step S211, and the process by the distance measurement part 72 is repeated for the next captured image 4Ag and the next captured image 4Bg (next frames).

On the other hand, when the common area setting part 74 determines that both gaze positions 3Au and 3Bu are in the common area 3AB (Yes of step S215), the inner-common area determination part 70 enables the gaze position displacement determination part 80 to perform the second determination process P2 of the displacement determination of the gaze position (step S216). The size of the common area 3AB is reported to the gaze position displacement determination part 80. After the second determination process P2 is terminated, the first determination process P1 is terminated.

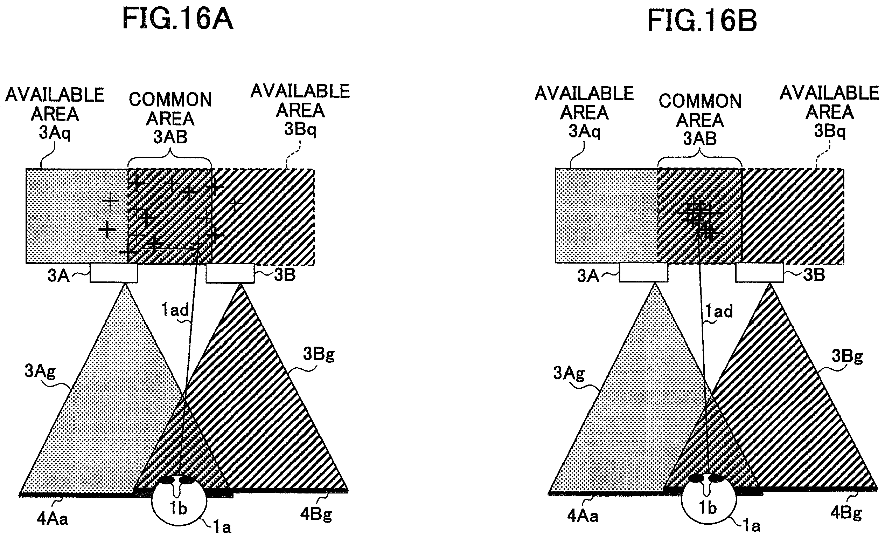

Regarding the second determination process P2 by the gaze position displacement determination part 80, first, the operation characteristics of the eyeball 1b will be described. FIG. 16A and FIG. 16B are diagrams for explaining the operation characteristics of the eyeball. Depending on an operational state of the eyeball 1b, there is a moment when the gaze position is not stable.

FIG. 16A depicts the saccade state in which the gaze position rapidly jumps, and illustrates an example of a case of the multiple gaze positions 3Au and the multiple gaze positions 3Bu detected in a certain time section. The multiple gaze positions 3Au and the multiple gaze positions 3Bu are distributed in a wide range inside and outside the common area 3AB. That is, FIG. 16A depicts the movements of the eyeball 1b such as rapid jumps from right to left and vice versa. In the saccade state, the eyeball 1b moves too fast and the pupils are unstable. Hence, the gaze positions are not precisely detected.

FIG. 16B depicts the stable state while the gaze positions are stable, and illustrates an example of a case of the multiple gaze positions 3Au and the multiple gaze positions 3Bu detected in a certain time section. The multiple gaze positions 3Au and the multiple gaze positions 3Bu are intensively detected in a certain area. That is, a direction where the eyeball 1b faces is stable, and the gaze positions are stable. In the time section where the gaze positions are stable, it is preferable to specify the gaze position.

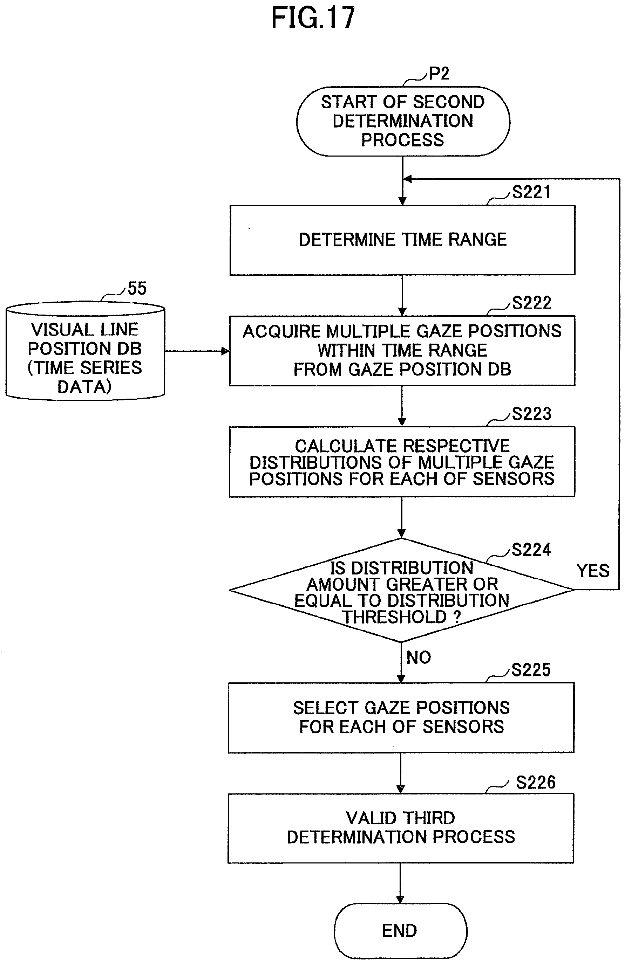

The second determination process P2 by the gaze position displacement determination part 80 will be described. FIG. 17 is a flowchart for explaining the second determination process P2 by the gaze position displacement determination part.

In FIG. 17, in response to the report of the size of the common area 3AB from the inner-common area determination part 70, the displacement determination part 82 of the gaze position displacement determination part 80 determines the time section of a time length defined beforehand in the chronological order by tracing from a current time (step S221). The time length may be set by the user.

The displacement determination part 82 acquires the multiple gaze positions 3Au and the multiple gaze positions 3Bu in the time section determined in step S211 from the visual position DB 55 (step S222), and calculates the distribution amount of the multiple gaze positions 3Au and the distribution amount of the multiple gaze positions 3Bu (step S223). The multiple gaze positions 3Au include the gaze position 3Au of the most recent gaze position data 53, and the multiple gaze positions 3Bu include the gaze position 3Bu of the most recent gaze position data 53.

The displacement determination part 82 determines whether both distribution amounts are greater than or equal to the distribution threshold (step S224). When both distribution amounts are greater than or equal to the distribution threshold (Yes of step S224), the displacement determination part 82 repeats the above described process from step S221.

On the other hand, when the displacement determination part 82 determines that both or one of the distribution amounts is less than the distribution threshold (No of step S224), the gaze position selection part 84 selects the gaze position 3Au and the gaze position 3Bu of the most recent gaze position data 53 from the visual position DB 55 (step S225).

The gaze position selection part 84 reports the selected gaze positions 3Au and 3Bu to the gaze position error assumption part 86, and then, the third determination process P3 is enabled (step S226). After the third determination process P3 is terminated, the second determination process P2 is terminated.

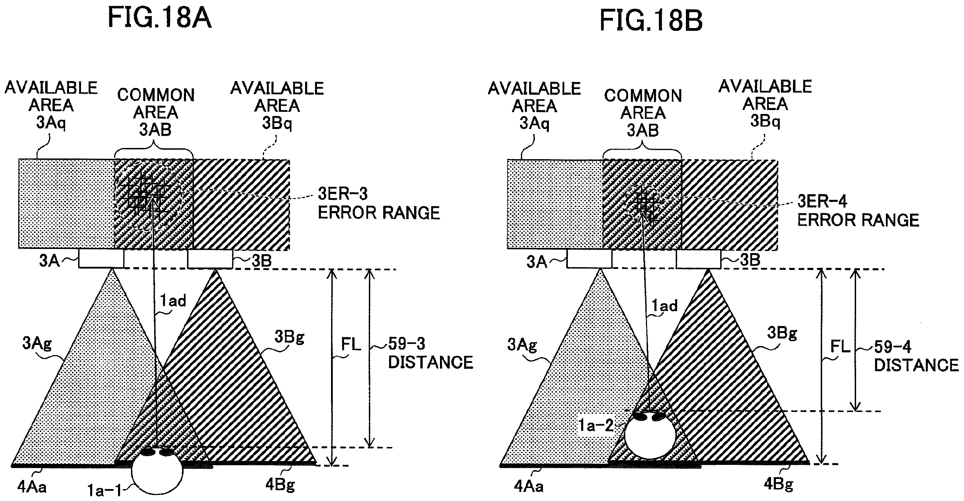

Before the third determination process P3 of the gaze position displacement determination part 80, a detection error of the gaze position of the sensor 3 will be described. FIG. 18A and FIG. 18B are diagrams for explaining the detection error of the gaze position of the sensor. Since an output of each of the sensors 3 includes the error, the output may be degraded due to the distance 59, the individual difference of the cornea reflection position, and the like. In FIG. 18A and FIG. 18B, the gaze direction 1ad indicates the same gaze.

FIG. 18A illustrates an example of a case in which the detection error of the gaze position is greater. Even if the gaze direction 1ad from the face 1a-1 is the same, the detection error of the gaze position may become greater as indicated by an error range 3ER-3 depending on a standing location at a distance 59-3 shorter than the focal length FL and the individual difference of the cornea shape.

FIG. 18B illustrates an example of a case in which the detection error of the gaze position. Even if the gaze direction 1ad from a face 1a-2 is the same, the detection error of the gaze position may become shorter as indicated by an error range 3ER-4 depending on a standing location at a distance 59-4 shorter than the focal length FL and the individual difference of the cornea shape.

Even in a case of the same person, detection accuracy may be changed due to a variance of the distance 59 such as the cases of the error range 3ER-3 and the error range 3ER-4.

In the second embodiment, the error threshold table 89 is prepared beforehand in which the distance 59, and the error range 3ER of the sensor 3 as the error threshold with respect to the cornea shape pattern for each person are recorded. The cornea shape may be calculated by using the image feature point data 57.

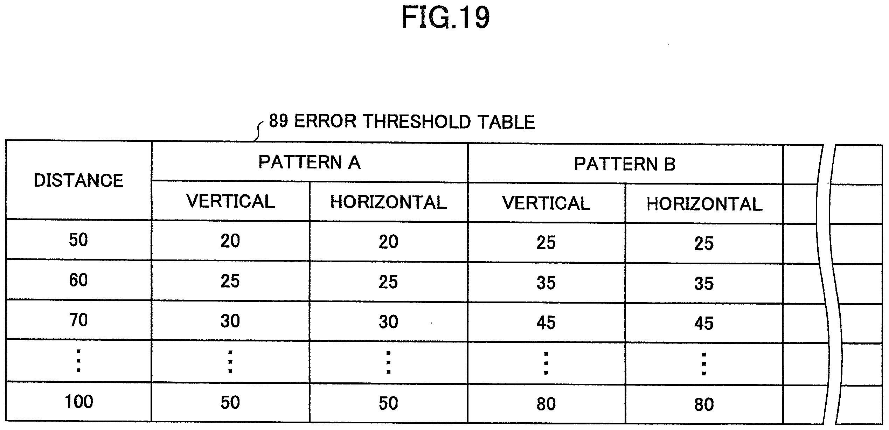

FIG. 19 is a diagram illustrating a data structure example of the error threshold table. In FIG. 19, the error threshold table 89 includes items of "DISTANCE", "VERTICAL" and "HORIZONTAL" with respect to the cornea shape pattern for each person, and the like.

The "DISTANCE" indicates a predetermined distance range from each of the sensors 3 to the face 1a. In this example, a unit is "cm". From the distance of "50"cm, the distance until "100"cm is indicated by every "10"cm. Values of the shortest distance and the distance interval from the sensors 3 are not limited to this example.

For the cornea shape pattern for each person, the error range 3ER of the sensor 3 is indicated by the vertical length and the horizontal length by a cm unit. In this example, with respect to the cornea shape pattern A of the person A, the cornea shape pattern B of the person B, and the like, the error range 3ER of the sensor 3 is indicated.

When the distance from the sensor 3 is less than "50"cm, the error range 3ER with respect to the cornea shape pattern A of the person A is "20"cm in the vertical length and "20"cm in the horizontal length. The error range 3ER with respect to the cornea shape pattern B of the person B is "25"cm in the vertical length and "25"cm in the horizontal length. At the predetermined distance intervals, the error range 3ER is indicated.

When the cornea shape patterns of multiple persons such as the person A and the person B are acquired beforehand, the error range 3ER for detecting the gaze position of the sensor 3 is calculated with respect to the cornea shape pattern, and the error threshold table 89 is created. When the displacement detection of the sensor 3 is conducted, a most similar cornea shape pattern may be specified from the error threshold table 89, and the error range 3ER corresponding to a measured distance may be acquired.

In a case in which each of the individuals or individual groups, for each set of identification information of the individual or the individual group, the error range 3ER corresponding to the distance may be set in the error threshold table 89. When the arrangement displacement of the sensor 3 is conducted, the error range 3ER may be acquired from the error threshold table 89 by using the identification information of the individual or the individual group.

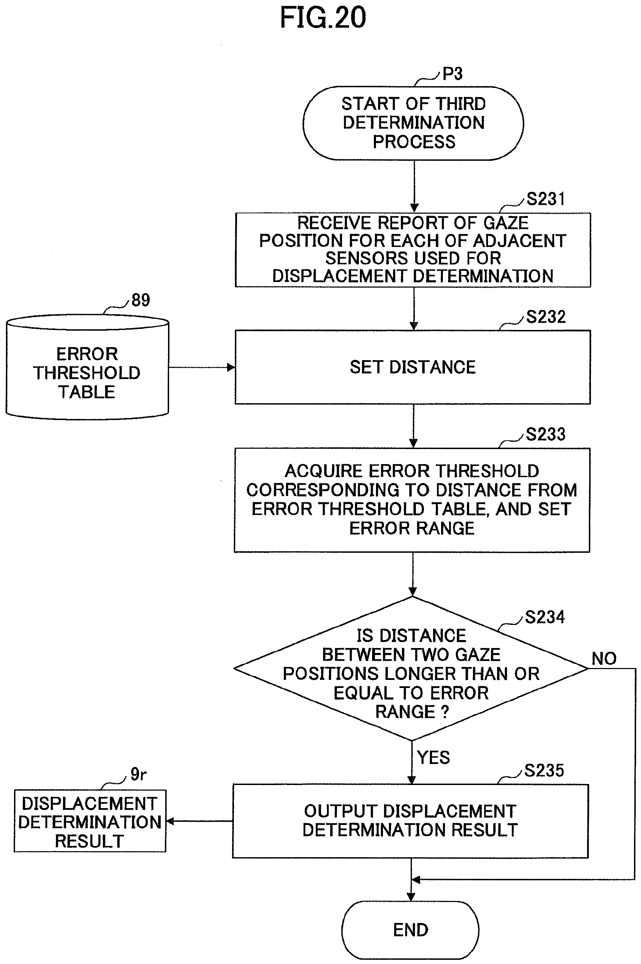

The third determination process P3 by the gaze position displacement determination part 80 will be described. FIG. 20 is a flowchart for explaining the third determination process P3 by the gaze position displacement determination part 80. The third determination process P3 is enabled when it is determined that the movement of the eyeball 1b is in the retained state.

In FIG. 20, in response to the report of the gaze position 3Au and the gaze position 3Bu from the gaze position selection part 84, the gaze position error assumption part 86 sets the reported gaze position 3Au and gaze position 3Bu for the displacement determination (step S231).

After that, the gaze position error assumption part 86 acquires a value of the distance 59 calculated in the first determination process from the storage part 130b, and sets the value of the distance 59 as a target distance (step S232). The gaze position error assumption part 86 acquires the error threshold corresponding to the distance 59 in the error threshold table 89, and sets the acquired error threshold to the error range 3ER (step S233).

Next, the displacement presence determination part 88 determines whether the distance between the gaze position 3Au and the gaze position 3Bu is greater than or equal to a determination threshold (step S234). When the distance between the gaze position 3Au and the gaze position 3Bu is shorter than the determination threshold (No of step S234), the displacement presence determination part 88 determines that there is no displacement of two sensors adjacent to each other. In this case, the third determination process P3 with respect to the gaze position 3Au and the gaze position 3Bu is terminated. The third determination process P3 is enabled when receiving a next report from the gaze position selection part 84.

On the other hand, when the distance between the gaze position 3Au and the gaze position 3Bu is longer than or equal to the determination threshold (Yes of step S234), the displacement presence determination part 88 determines that at least one of two sensors 3 adjacent to each other is displaced, and outputs the displacement determination result 9r indicating the displacement to the storage part 130b (step S235). The displacement determination result 9r may indicate the identification information of the two sensors 3. After that, the third determination process P3 is terminated. When a next report is received from the gaze position selection part 84, the third determination process P3 becomes enabled.

The displacement determination result 9r output to the storage part 130b is transmitted to the destination defined beforehand by the report processing part 90.

In the first embodiment and the second embodiment described above, the arrangement displacement is determined by using the common area 3AB where the captured images 4g acquired by the sensors 3 adjacent to each other are overlapped. As described above in the system 1002 (FIG. 8), in a case in which the sensor 3-1 including the information processing apparatus 7 conduct the arrangement displacement, the sensor 3-1 is a primary sensor and the sensor 3 is a secondary sensor. In this primary-secondary relationship, the process pertinent to the first embodiment or the second embodiment is performed.

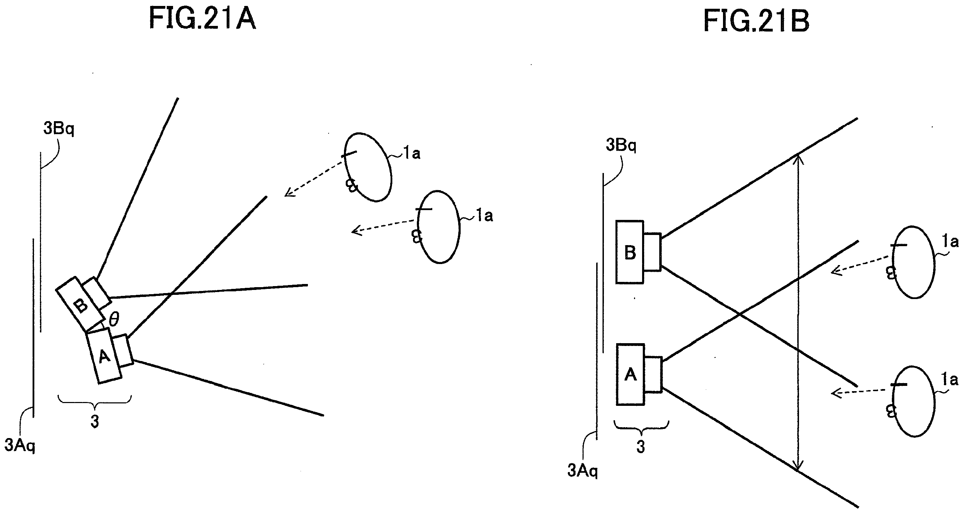

Next, an arrangement method of the multiple sensors 3 to extend the detection range will be described. FIG. 21A and FIG. 21B are diagrams illustrating the arrangement method of the multiple sensors 3 to extend the detection range in a perpendicular direction. In FIG. 21, a case of the two sensors 3 represented as the sensor A and the sensor B will be described. In this case, three or more sensors 3 may be used.

In FIG. 21A, the sensor A and the sensor B are arranged to be closer to each other and have an arrangement angle difference θ in the perpendicular direction, as a first arrangement method for extending the detection range in the perpendicular direction. In FIG. 21B, a space is provided between the sensor A and the sensor B, and the sensor A and the sensor B are arranged so that the same arrangement angle is set and directions thereof are approximately parallel, as a second arrangement method for extending the detection range in the perpendicular direction. In this example, the space is provided between the sensor A and the sensor B in the perpendicular direction, and the sensor A and the sensor B are set to face in parallel to the ground.

In a case in which a range of the gaze direction (that is, a direction of the face 1a) is wider with respect to the sensor A or B, the range may exceed the detection range. In this case, the gaze position may not be precisely measured. When the person looks at a constant position regardless of a position of the face 1a, for instance, when the person looks at a wagon at a supermarket or the like, a location of products is approximately specified. Hence, the sensors A and B are arranged by the first arrangement method, and the detection range in the perpendicular direction is extended.

In a state of looking at a front of the sensor A or B, for instance, products are displayed from top to bottom, when the face 1a is placed above and looks at a subject above, and when the face 1a is placed below and looks at the subject at a position closer to the ground, the sensors A and B are arranged by the second arrangement method, and the detection range is extended.

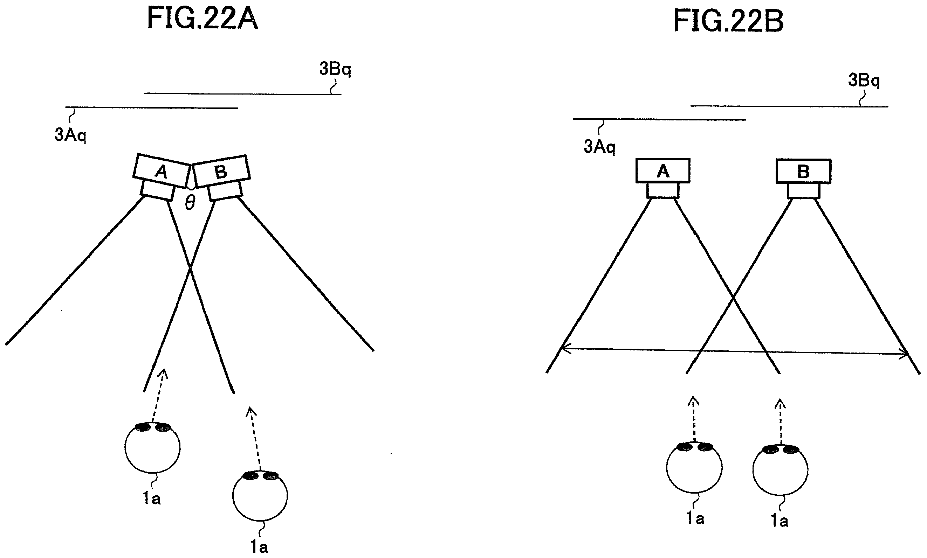

FIG. 22A and FIG. 22B are diagrams illustrating the arrangement methods of the multiple sensors to extend the detection range in a parallel direction. In FIG. 22A and FIG. 22B, a case of the two sensors 3 represented as the sensor A and the sensor B will be described. In this case, three or more sensors 3 may be used.

In FIG. 22A, a third arrangement method is depicted in which the sensor A and the sensor B are arranged to be closer with the arrangement angle difference θ in the parallel direction, and the detection range in the parallel direction is extended. In FIG. 22B, a fourth arrangement method is depicted in which a space is provided between the sensor A and the sensor B, and the sensor A and the sensor B are arranged with the same arrangement angle and to face approximately in parallel. In this example, the sensor A is distanced from the sensor B in the parallel direction, and the sensors A and B are set to face in parallel to the ground.

In a state of viewing the subject in a horizontal direction, the sensors A and B are arranged by the third arrangement method, and the detection range is extended in the parallel direction. In a state of viewing a front subject, the sensors A and B are arranged by the fourth arrangement method, and the detection range is extended in the horizontal direction.

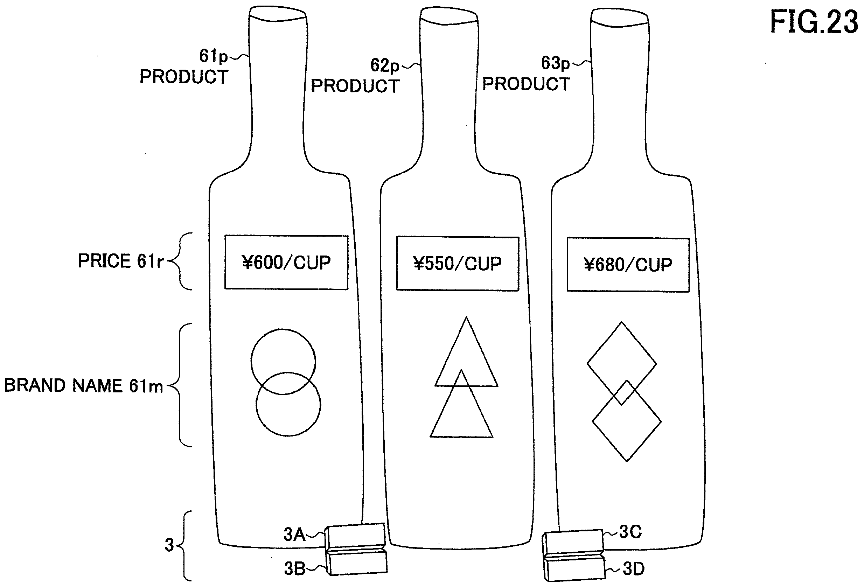

By combining the first arrangement method in FIG. 21A and the fourth arrangement method in FIG. 22B, it is possible to extend the detection range in the perpendicular direction and in the horizontal direction. FIG. 23 is a diagram illustrating an arrangement example in which the detection range is extended in both the perpendicular direction and the horizontal direction.

In FIG. 23, sensors 3A, 3B, 3C, and 3D as four sensors 3 are used to extend the detection range in both perpendicular direction and the horizontal direction. The four sensors 3 are arranged closer to products 61p, 62p, and 63p, and are connected by the wireless or wired connection to the information processing apparatus 7 defined beforehand.

The sensors 3A and 3B are arranged by the first arrangement method at a side of the product 61p to extend the detection range in the perpendicular direction. Due to the first arrangement method, the detection range is extended in a vertical direction at the gaze position. When the gaze position is detected in the common area of the sensors 3A and 3B, the presence or the absence of the arrangement displacement pertinent to the sensors 3A and 3B is determined.

The sensors 3C and 3D are also arranged by the first arrangement method at a side of the product 63p to extend the detection range in the perpendicular direction. Due to the first arrangement method, the detection range is extended in the vertical direction at the gaze position. When the gaze position is detected in the common area of the sensors 3C and 3D, the presence or the absence of the arrangement displacement pertinent to the sensors 3C and 3D is determined.

Also, a first set of the sensors 3A and 3B and a second set of the sensors 3C and 3D are arranged by the fourth arrangement method to extend the detection range in the parallel. When the gaze position is detected in the common area of the sensors 3A and 3C, the presence or the absence of the arrangement displacement pertinent to the sensors 3A and 3C is determined. When the gaze position is detected in the common area of the sensors 3B and 3D, the presence or the absence of the arrangement displacement pertinent to the sensors 3B and 3D is determined.

In FIG. 23, the products 61p, 62p, and 63p having a bottle shape such as a liquor bottle or the like are displayed in alignment. A price 61r and a brand name 61m are indicated on each of the products 61p to 63p. In this case, it is possible to conduct marketing research pertinent to which bottle the customer is interested in and its reason by detecting the gaze position.

In this display, it is possible to specify the bottle as one of products 61p, 62p, and 63p in which the customer is interested, by the fourth arrangement method. Moreover, by the first arrangement method, it is possible to research whether the reason is the price 61r or the brand name 61m, which the customer is interested in.

As described above, even if the detection range is extended by using the multiple sensors 3 being relatively cheap, it is possible to detect the arrangement displacement in the first embodiment or the second embodiment.

As described above, a case of two sensors 3 adjacent to each other is described. However, three or more sensors 3 may be adjacent. The primary-secondary relationship among the multiple sensors in this case will be described.

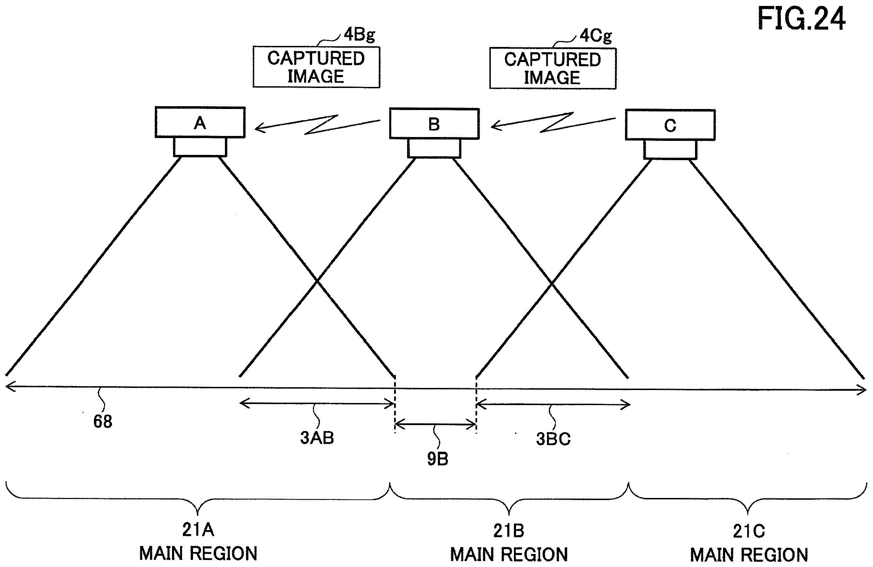

FIG. 24 is a diagram for explaining an example of the primary-secondary relationship in a case of aligning three or more sensors. In FIG. 24, the sensor A, the sensor B, and a sensor C are depicted as three adjacent sensors 3.

In FIG. 24, a detection range 68 is regarded as a range acquired by combining the sensor A, the sensor B, and the sensor C. In the detection range 68, common areas 3AB and 3BC, in which two adjacent sensors 3 image the face 1a, are defined beforehand, for the sensors A, B, and C.

The common area 3AB is set with respect to the sensor A, and the common area 3BC is set with respect to the sensor C. With respect to the sensor B, two common areas are set as the common area 3AB and the common area 3BC.

In this example, the common area 3AB is included in a main region 21A of the sensor A. Also, an area 9B between the common area 3AB and the common area 3BC, and the common area 3BC are included in a main area 21B of the sensor B. The main region 21C of the sensor C is included in the common area 3BC.

When the face 1a is located at a position other than the common area 3AB in the main region 21A of the sensor A, the gaze position is detectable by the sensor A alone. Hence, the arrangement displacement determination is conducted.

When the face 1a is located in the common area 3AB, the gaze position is detectable by the sensor A and the sensor B. However, since the common area 3AB is included in the main region 21A of the sensor A, the sensor A is regarded as the primary sensor and the sensor B is regarded as the secondary sensor.

When the face 1a is located in the area 9B, the gaze position is detectable by the sensor B alone. Hence, the arrangement displacement determination is not conducted.

When the face 1a is located in the common area 3BC, the gaze position is detectable by the sensor B and the sensor C. However, since the common area 3BC is included in the main region 21B of the sensor B, the sensor B is regarded as the primary sensor and the sensor C is regarded as the secondary sensor.

When the face 1a is located in the main region 21C of the sensor, the gaze position is detectable by the sensor C alone. Hence, the arrangement displacement determination is not conducted.

In the primary-secondary relationship depicted in FIG. 24, at least the sensors A and B preferably include the configuration of the sensor 3-1 in the system 1002 (FIG. 8), and the sensor C may have the configuration of the sensor 3 in the system 1002 (FIG. 8). As described above, in accordance with the primary-secondary relationship, the sensor B transmits the captured image 4Bg to the sensor A. The sensor C transmits the captured image 4Cg to the sensor B.

In both cases in which the sensors A, B, and C are aligned in the parallel direction and in which the sensors A, B, and C are aligned in the perpendicular direction, the primary-secondary relationship may be defined as above described example in FIG. 24.

As described above, according to the first embodiment and the second embodiment, even in a case of enlarging the detection range by using the two sensors 3 (imaging devices) including the LED 3a and the camera 3b, for each of captured images 4g for each of the sensors 3, the gaze position is calculated based on the feature points acquired from the captured image 4g. By detecting the arrangement displacement of the sensors 3 using the calculated result, it is possible to reduce a calculation workload.

In various states having the gaze s of multiple persons in a distribution field, it has been desired to minimize cost of the sensors 3 and to reduce the calculation workload. In the first embodiment and the second embodiment, it is possible to solve these problems.

Accordingly, it is possible to reduce the workload of the determination process of the arrangement displacement of the imaging devices.

## Claims

1. A displacement determination program for causing a computer to execute a displacement determination process comprising:
extracting, respectively, a first face area (4f) and a second face area (4f) of a person from a first image (4g) and a second image (4g) captured by a first imaging device (3A) and a second imaging device (3B) arranged at certain positions where a first available range (3Aq) and a second available range (3Bq) for detecting a gaze are overlapped;
detecting a first feature point (1c) and a second feature point (1c) based on light reflections in the first face area (4f) and the second face area (4f) being extracted;
calculating a first gaze position (3Au) and a second gaze position (3Bu) of the person based on the first feature point (1c) and the second feature point (1c) being detected; and
determining an arrangement displacement from both or one of the certain positions of the first imaging device (3A) and the second imaging device (3B) based on a relative position relationship between the first gaze position (3Au) and the second gaze position (3Bu).

2. The displacement determination program according to claim 1, further comprising:
determining whether the first gaze position (3Au) and the second gaze position (3Bu) fall in a common range where the first available range (3Aq) of the first imaging device (3A) and the second available range (3Bq) of the second imaging device (3B) for detecting the gaze are overlapped; and
determining the arrangement displacement when the first gaze position (3Au) and the second gaze position (3Bu) fall in the common range.

3. The displacement determination program according to claim 1, wherein
both or one of the first imaging device (3A) and the second imaging device (3B) is determined to be displaced from both or one of the certain positions, and
a displacement determination result is output,
when the first gaze position (3Au) and the second gaze position (3Bu) fall in the common range, and
when a width between the first gaze position (3Au) and the second gaze position (3Bu) is greater than or equal to an error range.

4. The displacement determination program according to claim 2 or 3, further comprising:
calculating a distance from the first imaging device (3A) or the second imaging device (3B) to the person based on multiple first feature points (1c) and multiple second feature points (1c) extracted from one or more of the first image (4g) and the second image (4g); and
acquiring a size of the common range corresponding to the calculated distance by referring to a table indicating the size of the common range for each of distances from one of the first imaging device (3A) and the second imaging device (3B) to the person; and
defining the common range in an area including the first gaze position (3Au) and the second gaze position (3Bu) based on the acquired size.

5. The displacement determination program according to claim 2, further comprising:
storing the first gaze position (3Au) and the second gaze position (3Bu) having been calculated in a chronological order in a storage part (130b);
calculating a first distribution amount and a second distribution amount by acquiring multiple first gaze positions (3Au) and multiple second gaze positions (3Bu), which are stored in the storage part (130b), in a certain time section from a current time; and
selecting the first gaze position (3Au) and the second gaze position (3Bu) at the current time for a displacement determination, when the first distribution amount and the second distribution amount are less than a distribution threshold.

6. The displacement determination program according to any one of claims 2 to 4, further comprising:
acquiring the error range based on the width between the first gaze position (3Au) and the second gaze position (3Bu), and a cornea shape of the person.

7. A displacement determination method by a computer, comprising:
extracting, respectively, a first face area (4f) and a second face area (4f) of a person from a first image (4g) and a second image (4g) captured by a first imaging device (3A) and a second imaging device (3B) arranged at certain positions where a first available range (3Aq) and a second available range (3Bq) for detecting a gaze are overlapped;
detecting a first feature point (1c) and a second feature point (1c) based on light reflections in the first face area (4f) and the second face area (4f) being extracted;
calculating a first gaze position (3Au) and a second gaze position (3Bu) of the person based on the first feature point (1c) and the second feature point (1c) being detected; and
determining an arrangement displacement from both or one of the certain positions of the first imaging device (3A) and the second imaging device (3B) based on a relative position relationship between the first gaze position (3Au) and the second gaze position (3Bu).

8. An information processing apparatus (7), comprising:
an extraction part (50) configured to extract, respectively, a first face area (4f) and a second face area (4f) of a person from a first image (4g) and a second image (4g) captured by a first imaging device (3A) and a second imaging device (3B) arranged at certain positions where a first available range (3Aq) and a second available range (3Bq) for detecting a gaze (1ad) are overlapped;
a detection part (50) configured to detect a first feature point (1c) and a second feature point (1c) based on light reflections in the first face area (4f) and the second face area (4f) being extracted;
a calculation part (70) configured to calculate a first gaze position (3Au) and a second gaze position (3Bu) of the person based on the first feature point (1c) and the second feature point (1c) being detected; and
a determination part (80) configured to determine an arrangement displacement from both or one of the certain positions of the first imaging device (3A) and the second imaging device (3B) based on a relative position relationship between the first gaze position (3Au) and the second gaze position (3Bu).
